# FASCICULE DE BREVET EUROPEEN

(11) **EP 1 767 046 B1**
(45) Date de publication et mention de la délivrance du brevet: **17.03.2010**
(21) Numéro de dépôt: 05778817.6
(22) Date de dépôt: 20.06.2005
(51) Int. Cl.: H04W 72/08

(54) **PROCEDE DE SELECTION DE STATIONS RECEPTRICES DANS UN SYSTEME DE TRANSMISSION RADIO DE DONNEES**
VERFAHREN ZUR AUSWAHL VON EMPFANGSSTATIONEN IN EINEM DATENFUNKÜBERTRAGUNGSSYSTEM
METHOD FOR SELECTING RECEIVING STATIONS IN A DATA RADIO TRANSMITTING SYSTEM

(30) Priorité: 13.07.2004 FR 0451529
(43) Date de publication de la demande: 28.03.2007
(73) Titulaire: FRANCE TELECOM, 75015 Paris (FR)
(72) Inventeur: BONALD, Thomas, F-78960 Voisins le Bretonneux (FR); PROUTIERE, Alexandre, F-75006 Paris (FR)
(86) Numéro de dépôt international: PCT/FR2005/001540
(87) Numéro de publication internationale: WO 2006/016024

(56) Documents cités:
- WO-A-02/093757
- US-A1- 2003 043 732
- US-B1- 6 449 490
- LI, L. AND GOLDSMITH, A. J.: "Capacity and Optimal Resource Allocation for Fading Broadcast channels - Part I: Ergocic Capacity" IEEE TRANSACTIONS ON INFORMATION THEORY, vol. 47, no. 3, mars 2001 (2001-03), pages 1083-1102, XP002319305 cité dans la demande
- BARRETO A N ET AL: "JOINT SIGNAL PRECODING IN THE DOWNLINK OF SPREAD-SPECTRUM SYSTEMS" IEEE TRANSACTIONS ON WIRELESS COMMUNICATIONS, IEEE, PISCATAWAY, US, vol. 2, no. 3, mai 2003 (2003-05), pages 511-518, XP001163634 ISSN: 1536-1276 cité dans la demande

## Description

La présente invention concerne un procédé de sélection de stations réceptrices destinataires dans un système de transmission radio de données d'une station émettrice vers une pluralité de stations réceptrices.

L'invention trouve une application particulièrement avantageuse dans le domaine des réseaux radio mobiles, et plus spécialement dans celui de la transmission de données entre une station de base et des stations mobiles.

D'une manière générale, dans un réseau de téléphonie mobile, les stations de base du réseau sont amenées à fournir des données à des stations mobiles abonnées audit réseau. Les stations mobiles aptes à recevoir des données d'une même station de base forment une cellule. La plupart du temps, les données émises par la station de base sont des fichiers numériques qui sont transmis aux stations mobiles réceptrices de manière sporadique, c'est-à-dire lorsque cela est nécessaire, en utilisant une fréquence porteuse située dans un canal radio donné.

Plus précisément, les systèmes radio de troisième génération tels que l'UMTS HSDPA (« High Speed Data Rocket Access ») utilisent pour la transmission radio de données en voie descendante un mécanisme d'accès multiple à répartition dans le temps, connu sous l'acronyme de TDMA pour « Time Division Multiple Access ». En substance, cette technique, dite à temps partagé, revient à définir des fenêtres temporelles (« slots »), de l'ordre de la milliseconde par exemple, et à transmettre les données à une station mobile réceptrice destinataire lors de l'ouverture d'une de ces fenêtres temporelles élémentaires.

Il existe par ailleurs un autre mécanisme d'accès connu, désigné sous l'acronyme CDMA pour « Code Division Multiple Access », ou accès multiple à répartition de code, qui consiste à attribuer à chaque station mobile réceptrice un code spécifique et à transmettre les données destinées à une station réceptrice destinataire en codant ces données au moyen du code qui lui a été attribué. Toutes les stations mobiles reçoivent alors les données codées et les décodent avec leur propre code. Bien entendu, seule la station mobile possédant le code ayant servi au codage initial pourra restituer convenablement les données envoyées par la station de base émettrice.

Par rapport au mécanisme CDMA, les avantages du mécanisme TDMA sont les suivants :
- une meilleure adaptation à la nature sporadique du trafic de données du fait de l'absence de signalisation préalable à la transmission (mode dit « sans connexion »),
- l'absence d'interférence intra-cellulaire, c'est-à-dire entre signaux destinés à des stations mobiles réceptrices rattachées à une même cellule,
- une augmentation de la capacité de transmission de débit à l'aide d'algorithmes d'ordonnancement, dits « opportunistes », qui sélectionnent de préférence une station mobile réceptrice dont les conditions de réception radio sont favorables.

Les algorithmes opportunistes tirent parti de l'indépendance des variations rapides des conditions radio de chaque station mobile. Ils nécessitent une voie de retour de chaque station mobile vers la station de base pour fournir périodiquement une information représentative de la qualité de réception du canal radio. De manière pratique, la station de base envoie un même signal de référence à toutes les stations mobiles, lesquelles renvoient à leur tour le niveau du signal reçu, au rythme de l'ouverture des fenêtres temporelles élémentaires.

Cependant, l'inconvénient du mécanisme d'accès multiple TDMA est qu'il ne permet pas d'atteindre la capacité en débit promise par la théorie de l'information telle qu'exposée dans l'article de L. Li et A.J. Goldsmith, « Capacity and optimal resource allocation for fading broadcast channels », Part 1 : Ergodic capacity, IEEE Transactions on Information Theory, Vol. 47, N° 3, March 2001.

Pour augmenter la capacité en débit d'une cellule de stations mobiles, Il y a avantage à pouvoir transmettre, dans une fenêtre temporelle élémentaire donnée, vers plusieurs stations mobiles et non pas vers une seule. A cet effet, une solution consiste à ajouter au mécanisme TDMA au sens strict un codage des stations mobiles qui permet alors d'émettre simultanément, dans une même fenêtre élémentaire, vers un ensemble de stations mobiles réceptrices différenciées par leur code selon un mécanisme analogue au CDMA. Toutefois, le codage utilisé en combinaison avec le TDMA relève d'une technique spécifique appelé « codage joint » qui présente la particularité de limiter l'interférence entre stations mobiles d'une même cellule. On trouvera un exemple type de codage joint dans l'article de A.N. Barreto et G. Fettweis, « Joint signal precoding in the downlink of spread-spectrum systems », IEEE Transactions on Wireless Communications, Vol. 2, N° 3, May 2003.

On observera cependant que te nombre de stations mobiles multiplexées dans une même fenêtre temporelle élémentaire selon le mécanisme TDMA avec codage joint est relativement limité du fait que :
- le gain en débit d'un tel multiplexage est d'autant plus important que les stations mobiles ont des conditions de réception différentes,
- la complexité du codage joint augmente fortement avec le nombre de stations mobiles multipexées,
- l'efficacité de l'algorithme d'ordonnancement opportuniste diminue rapidement avec le nombre de stations mobiles multiplexées.

Le standard UMTS HSDPA prévoit la possibilité d'allouer les ressources radio selon ce schéma de multiplexage qui peut être vu comme un mécanisme TDMA avec quelques stations mobiles multiplexées (typiquement 1, 2 ou 3) dans chaque fenêtre temporelle élémentaire. Cependant, ce standard, basé sur une technologie CDMA, ne prévoit pas l'utilisation de codage joint.

Par ailleurs, l'état de la technique, y compris l'article de Li et Goldsmith précité, ne donne actuellement aucune indication pratique sur la façon dont les stations mobiles à multiplexer peuvent être choisies lorsqu'un codage joint est utilisé.

Aussi, le problème technique à résoudre par l'objet de la présente invention est de proposer un procédé de sélection de stations réceptrices destinataires dans un système de transmission radio de données d'une station émettrice vers une pluralité de stations réceptrices, ledit système de transmission radio utilisant un mécanisme d'accès multiple à répartition dans le temps avec codage joint, qui permettrait de sélectionner de manière appropriée les stations mobiles vers lesquelles la station de base doit émettre simultanément, en vue d'approcher au mieux la capacité maximale d'une cellule telle que prévue par la théorie de l'information et tout en préservant les avantages du TDMA mentionnés plus haut

La solution au problème technique posé consiste, selon la présente invention, en ce que ledit procédé comprend les étapes consistant à :
- établir une liste de la pluralité de stations réceptrices, classées en fonction d'un indicateur de qualité de réception radio de chaque station réceptrice,
- découper ladite liste en P groupes de stations réceptrices,
- choisir, pour chaque fenêtre temporelle élémentaire dudit mécanisme d'accès multiple, une station réceptrice destinataire dans chacun desdits groupes.

Ainsi, le procédé selon invention permet d'obtenir que les stations mobiles réceptrices sélectionnées présentent des qualités de réception radio différentes, conformément aux prescriptions de la théorie de l'information concernant l'optimisation du débit de données.

Selon l'invention, l'étape de choisir une station réceptrice destinataire dans chacun desdits groupes est réalisé au moyen d'un algorithme d'ordonnancement opportuniste.

En ce sens, l'invention prévoit par exemple que les stations réceptrices choisies sont celles qui, dans leur groupe, présentent l'indicateur de qualité de réception instantané le plus élevé.

Dans un autre mode de réalisation de l'invention, les stations réceptrices choisies sont celles qui, dans leur groupe, présentent le rapport entre l'indicateur de qualité de réception instantané et l'indicateur de qualité de réception moyen le plus élevé.

Il est également prévu par l'invention que les stations réceptrices choisies sont celles qui, dans leur groupe, présentent le rapport entre l'indicateur de qualité de réception instantané et une valeur représentative du débit de données moyen reçu sur une fenêtre temporelle le plus élevé.

La description qui va suivre en regard des dessins annexés, donnés à titre d'exemples non limitatifs, fera bien comprendre en quoi consiste l'invention et comment elle peut être réalisée.

La figure 1 est un schéma d'un ensemble de communication entre une station de base émettrice et des stations mobiles réceptrices, mettant en oeuvre le procédé de sélection conforme à l'invention.

La figure 2 est un organigramme représentant les étapes du procédé de sélection conforme à l'invention.

La figure 3 est un schéma du contenu d'une suite de fenêtres temporelles élémentaires d'un mécanisme d'accès multiple mettant en oeuvre le procédé de sélection conforme à invention.

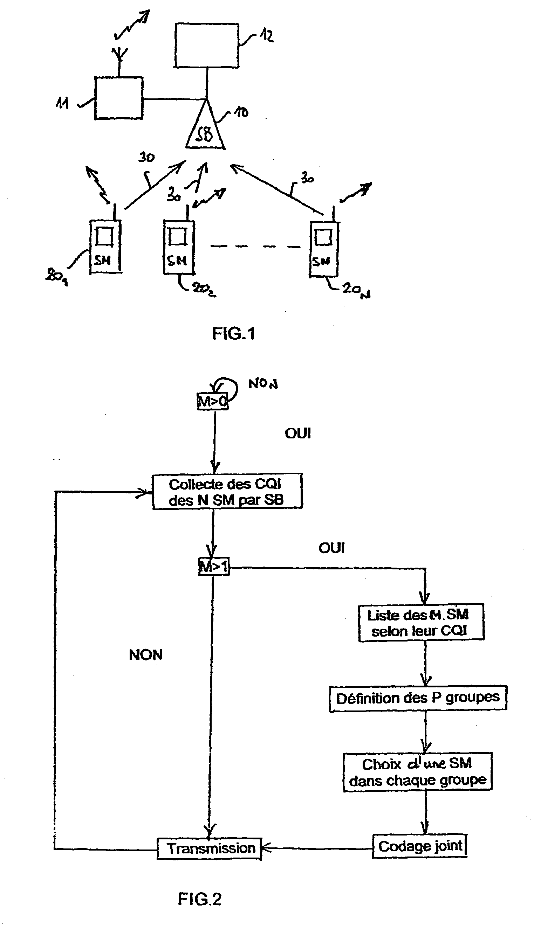

Sur la figure 1 est représenté un système de communication entre une station 10 de base SB et une pluralité de stations mobiles 20₁, 20₂,...., 20_{N} SM constituant par exemple une cellule dans un réseau de téléphonie mobile. Le nombre N de stations mobiles est évidemment variable.

Les N stations mobiles SM sont susceptibles de recevoir de la station 10 de base SB des données transmises dans un canal de radio-fréquence affecté au réseau via une interface radio 11

Les données à transmettre sont des fichiers numériques de longueur finie de sorte qu'à un instant donné seules quelques stations mobiles parmi la pluralité sont concernées par la réception de données, ce sont les stations mobiles réceptrices dites actives ou destinataires.

A chaque station mobile destinataire correspond donc un ensemble de données à transmettre depuis la station 10 de base émettrice qui sont mises en attente dans un espace mémoire de la station de base elle-même ou dans un élément 12 du réseau auquel est connectée la station 10 de base.

La transmission de données proprement dite est réalisée au moyen du mécanisme d'accès multiple à répartition dans le temps TDMA avec codage joint, comme cela a été expliqué plus haut. Rappelons que ce mécanisme permet de conserver les avantages du TDMA strict tout en augmentant la capacité de débit par un adressage simultané, c'est-à-dire dans la même fenêtre temporelle élémentaire (« slot »), de plusieurs stations réceptrices SM destinataires multiplexées par codage joint.

Du fait de l'utilisation d'algorithmes d'ordonnancement opportunistes, la qualité de réception de chaque station réceptrice SM doit être connue. Celle-ci s'exprime par un indicateur CQI (« Channel Quality Indicator ») mesuré pour chaque fenêtre élémentaire comme le niveau de réception d'un signal radio de référence émis par la station de base.

Les valeurs de cet indicateur mesurées pour chaque station mobile SM sur un certain nombre de fenêtres élémentaires sont envoyées à la station 10 de base (flèche 30) et peuvent être conservées dans une mémoire aux fins par exemple d'établir des moyennes.

Cette phase de collecte des indicateurs CQI de qualité de réception apparaît sur la figure 2 comme une étape initiales du procédé conforme à l'invention qui va maintenant être exposé de manière détaillée.

Lorsque la station 10 de base doit transmettre des données vers certaines stations réceptrices destinataires parmi les N stations mobiles de la cellule considérée, un test est effectué sur le nombre M des stations destinataires (M≤N).

Si M=1, alors une seule station mobile est destinataire de données, la station 10 de base transmet alors directement les données à cette station destinataire.

Si M>1, alors le procédé de sélection des stations destinataires dont les données seront transmises simultanément dans la même fenêtre temporelle élémentaire selon le mécanisme TDMA avec codage joint se déroule de la manière suivante.

Dans une première étape, on établit une liste de ces M stations destinataires classées par exemple dans l'ordre décroissant de leur indicateur de qualité de réception radio CQI.

Dans une deuxième étape, on découpe la liste préalablement établie en P groupes, le premier groupe contenant les stations mobiles réceptrices ayant les indicateurs CQI les plus élevés, le dernier groupe étant constitué des stations mobiles réceptrices de plus faible indicateur.

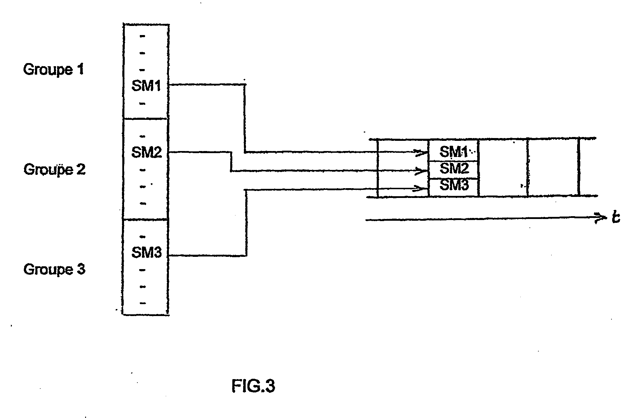

Enfin, dans une troisième étape, les stations mobiles destinataires dont les données seront transmises dans une même fenêtre temporelle sont choisies parmi les M stations mobiles destinataires de telle sorte qu'elles appartiennent à des groupes différents, conformément au schéma de la figure 3.

On satisfait ainsi à l'optimisation de la capacité de débit prévue par la théorie de information qui enseigne que la capacité maximum est obtenue pour des stations réceptrices ayant des qualités de réception radio différentes.

Ensuite, les données relatives aux stations réceptrices destinataires retenues pour être transmises dans la même fenêtre temporelle élémentaire sont encodées selon un schéma de codage joint donné et envoyées vers la cellule dans le canal radio affecté au réseau radio mobile. Chaque station mobile destinataire reçoit l'ensemble des données codées émises par la station 10 de base, mais ne décode convenablement que les données qui lui sont destinées, en vertu même du principe du codage de données.

Le nombre P de groupes peut être fixé une fois pour toutes, chacun ayant une taille sensiblement identique égale à environ N/P stations mobiles. Dans la pratique, ce nombre P ne sera pas très élevé, 2 ou 3 par exemple, pour tenir compte de l'augmentation rapide de la complexité du codage joint avec le nombre de stations mobiles multiplexées dans une même fenêtre temporelle élémentaire.

Cependant, le nombre P de groupes peut être quelconque et fixé dynamiquement par exemple par une taille minimum des groupes. Dans ce dernier cas, si P₀ est la taille minimum des groupes, le nombre total P de groupes est égal à INT(N/P₀). Ainsi avec P₀=5, on aura un seul groupe (P=1) si N<10, auquel cas le mode de transmission sera TDMA strict puisque les données concernant une seule station mobile réceptrice seront transmises. Pour 10≤N<15, P=₂ et les données de deux stations mobiles destinataires seront encodées et envoyées simultanément. Pour 15≤N<20, P=3 et les données de trois stations mobiles destinataires seront encodées et envoyées simultanément, et ainsi de suite.

Le choix, dans un même groupe, de la station mobile destinataire à laquelle les données seront effectivement transmises est effectué au moyen d'un algorithme d'ordonnancement opportuniste en appliquant une métrique déterminée.

Cette métrique peut être définie de multiples façons, on citera à titre de simples exemples :
- l'indicateur de qualité de réception instantané le plus élevé.
- le rapport entre l'indicateur de qualité de réception instantané et l'indicateur de qualité de réception moyen le plus élevé.
- le rapport entre l'indicateur de qualité de réception instantané et une valeur représentative du débit de données moyen reçu sur une fenêtre temporelle le plus élevé.

## Revendications

1. Procédé de sélection de stations réceptrices destinataires dans un système de transmission radio de données d'une station émettrice (10) vers une pluralité de stations réceptrices (20₁, 20₂,...., 20_{N}), ledit système de transmission radio utilisant un mécanisme (TDMA) d'accès multiple à répartition dans le temps avec codage joint, **caractérisé en ce que** ledit procédé comprend les étapes consistant à :
- établir une liste de la pluralité de stations réceptrices, classées en fonction d'un indicateur (CQI) de qualité de réception radio de chaque station réceptrice,
- découper ladite liste en P groupes de stations réceptrices,
- choisir, pour chaque fenêtre temporelle élémentaire dudit mécanisme d'accès multiple, une station réceptrice destinataire dans chacun desdits groupes.

2. Procédé selon la revendication 1, **caractérisé en ce que** l'étape de choisir une station réceptrice destinataire dans chacun desdits groupes est réalisée au moyen d'un algorithme d'ordonnancement opportuniste.

3. Procédé selon l'une quelconque des revendications 1 à 2, **caractérisé en ce que** les groupes sont de taille sensiblement identique.

4. Procédé selon l'une quelconque des revendications 1 à 3, **caractérisé en ce que** les stations réceptrices choisies sont celles qui, dans leur groupe, présentent l'indicateur de qualité de réception instantané le plus élevé.

5. Procédé selon l'une quelconque des revendications 1 à 3, **caractérisé en ce que** les stations réceptrices choisies sont celles qui, dans leur groupe, présentent le rapport entre l'indicateur de qualité de réception instantané et l'indicateur de qualité de réception moyen le plus élevé.

6. Procédé selon l'une quelconque des revendications 1 à 4, **caractérisé en ce que** les stations réceptrices choisies sont celles qui, dans leur groupe, présentent le rapport entre l'indicateur de qualité de réception instantané et une valeur représentative du débit de données moyen reçu sur une fenêtre temporelle le plus élevé.

7. Produit logiciel supporté par un support de données comprenant des instructions pour faire exécuter le procédé selon l'une quelconque des revendications 1 à 6 par un système informatique.

8. Dispositif de sélection de stations réceptrices destinataires dans un système de transmission radio de données d'une station émettrice (10) vers une pluralité de stations réceptrices, ledit système de transmission radio utilisant un mécanisme (TDMA) d'accès multiple à répartition dans le temps avec codage joint, **caractérisé en ce qu'**il comprend :
- des moyens pour établir une liste de la pluralité de stations réceptrices, classées en fonction d'un indicateur (CQI) de qualité de réception radio de chaque station réceptrice,
- des moyens pour découper ladite liste en P groupes de stations réceptrices,
- des moyens pour choisir, pour chaque fenêtre temporelle élémentaire dudit mécanisme d'accès multiple, une station réceptrice destinataire dans chacun desdits groupes.

9. Dispositif selon la revendication 8, **caractérisé en ce que** lesdits moyens pour choisir une station réceptrice destinataire dans chacun desdits groupes comprennent un algorithme d'ordonnancement opportuniste.

10. Dispositif selon la revendication 9, **caractérisé en ce que** lesdits moyens pour choisir une station réceptrice destinataire sont aptes à choisir les stations réceptrices qui, dans leur groupe, présentent l'indicateur de qualité de réception instantané le plus élevé.

11. Dispositif selon la revendication 9, **caractérisé en ce que** lesdits moyens pour choisir une station réceptrice destinataire sont aptes à choisir les stations réceptrices qui, dans leur groupe, présentent le rapport entre l'indicateur de qualité de réception instantané et l'indicateur de qualité de réception moyen le plus élevé.

12. Dispositif selon la revendication 9, **caractérisé en ce que** lesdits moyens pour choisir une station réceptrice destinataire sont aptes à choisir les stations réceptrices qui, dans leur groupe, présentent le rapport entre l'indicateur de qualité de réception instantané et une valeur représentative du débit de données moyen reçu sur une fenêtre temporelle le plus élevé.

13. Station émettrice (10), apte à transmettre des données au moyen d'un mécanisme d'accès multiple à répartition dans le temps avec codage joint vers une pluralité de stations réceptrices destinataires dans un système de transmission radio de données, **caractérisé en ce qu'**elle comprend un dispositif de sélection de stations réceptrices destinataires selon l'une des revendications 8 à 12.

## Claims

1. Method for selecting destination receiving stations in a data radio transmission system from a sending station (10) to a plurality of receiving stations (20₁, 20₂, ...., 20_{N}), said radio transmission system using a Time Division Multiple Access (TDMA) mechanism with joint coding, **characterized in that** said method comprises the steps consisting in:
- establishing a list of the plurality of receiving stations, classified according to an indicator (CQI) of radio reception quality of each receiving station,
- dividing said list into P groups of receiving stations,
- choosing, for each elementary timeslot of said multiple access mechanism, a destination receiving station in each of said groups.

2. Method according to Claim 1, **characterized in that** the step of choosing a destination receiving station in each of said groups is carried out by means of an opportunistic scheduling algorithm.

3. Method according to either one of Claims 1 or 2, **characterized in that** the groups are of substantially identical size.

4. Method according to any one of Claims 1 to 3, **characterized in that** the chosen receiving stations are those which, in their group, have the highest instantaneous reception quality indicator.

5. Method according to any one of Claims 1 to 3, **characterized in that** the chosen receiving stations are those which, in their group, have the highest ratio between the instantaneous reception quality indicator and the average reception quality indicator.

6. Method according to any one of Claims 1 to 4, **characterized in that** the chosen receiving stations are those which, in their group, have the highest ratio between the instantaneous reception quality indicator and a value representative of the average data rate received on a timeslot.

7. Software product supported by a data medium comprising instructions for having the method according to any one of Claims 1 to 6 executed by a computer system.

8. Device for selecting destination receiving stations in a data radio transmission system from a sending station (10) to a plurality of receiving stations, said radio transmission system using a Time Division Multiple Access (TDMA) mechanism with joint coding, **characterized in that** it comprises:
- means for establishing a list of the plurality of receiving stations, classified according to a radio reception quality indicator (CQI) of each receiving station,
- means for dividing said list into P groups of receiving stations,
- means for choosing, for each elementary timeslot of said multiple access mechanism, a destination receiving station in each of said groups.

9. Device according to Claim 8, **characterized in that** said means for choosing a destination receiving station in each of said groups comprise an opportunistic sequencing algorithm.

10. Device according to Claim 9, **characterized in that** said means for choosing a destination receiving station are capable of choosing the receiving stations which, in their group, have the highest instantaneous reception quality indicator.

11. Device according to Claim 9, **characterized in that** said means for choosing a destination receiving station are capable of choosing the receiving stations which, in their group, have the highest ratio between the instantaneous reception quality indicator and the average reception quality indicator.

12. Device according to Claim 9, **characterized in that** said means for choosing a destination receiving station are capable of choosing the receiving stations which, in their group, have the highest ratio between the instantaneous reception quality indicator and a value representative of the average data rate received on a timeslot.

13. Sending station (10) capable of transmitting data by means of a time division multiple access mechanism with joint coding to a plurality of destination receiving stations in a data radio transmission system, **characterized in that** it comprises a device for selecting destination receiving stations according to one of Claims 8 to 12.

## Patentansprüche

1. Verfahren zur Auswahl von Zielempfangsstationen in einem Datenfunkübertragungssystem von einer Sendestation (10) an mehrere Empfangsstationen (20₁, 20₂, ..., 20_{N}), wobei das Funkübertragungssystem einen Zeitmultiplex-Mehrfachzugriffsmechanismus (TDMA) mit gemeinsamer Codierung verwendet, **dadurch gekennzeichnet, dass** das Verfahren die Schritte enthält, die darin bestehen:
- eine Liste der mehreren Empfangsstationen zu erstellen, die in Abhängigkeit von einem Funkempfangsqualitätsanzeiger (CQI) jeder Empfangsstation eingestuft sind,
- die Liste in P Gruppen von Empfangsstationen aufzuteilen,
- für jedes elementare Zeitfenster des Mehrfachzugriffsmechanismus eine Zielempfangsstation in jeder der Gruppen auszuwählen.

2. Verfahren nach Anspruch 1, **dadurch gekennzeichnet, dass** der Schritt des Auswählens einer Zielempfangsstation aus jeder der Gruppen mittels eines opportunistischen Ablaufsteuerungsalgorithmus durchgeführt wird.

3. Verfahren nach einem der Ansprüche 1 bis 2,
**dadurch gekennzeichnet, dass** die Gruppen eine im Wesentlichen gleiche Größe haben.

4. Verfahren nach einem der Ansprüche 1 bis 3,
**dadurch gekennzeichnet, dass** die ausgewählten Empfangsstationen diejenigen sind, die in ihrer Gruppe den höchsten augenblicklichen Empfangsqualitätsanzeiger haben.

5. Verfahren nach einem der Ansprüche 1 bis 3,
**dadurch gekennzeichnet, dass** die ausgewählten Empfangsstationen diejenigen sind, die in ihrer Gruppe das höchste Verhältnis zwischen dem augenblicklichen Empfangsqualitätsanzeiger und dem mittleren Empfangsqualitätsanzeiger haben.

6. Verfahren nach einem der Ansprüche 1 bis 4,
**dadurch gekennzeichnet, dass** die ausgewählten Empfangsstationen diejenigen sind, die in ihrer Gruppe das höchste Verhältnis zwischen dem augenblicklichen Empfangsqualitätsanzeiger und einem für die in einem Zeitfenster empfangene mittlere Datenübertragungsrate repräsentativen Wert haben.

7. Softwareprodukt, das von einem Datenträger unterstützt wird, mit Anweisungen, um das Verfahren nach einem der Ansprüche 1 bis 6 von einem Informatiksystem ausführen zu lassen.

8. Vorrichtung zur Auswahl von Zielempfangsstationen in einem Datenfunkübertragungssystem von einer Sendestation (10) zu mehreren Empfangsstationen, wobei das Funkübertragungssystem einen Zeitmultiplex-Mehrfachzugriffsmechanismus (TDMA) mit gemeinsamer Codierung verwendet, **dadurch gekennzeichnet, dass** sie enthält:
- Einrichtungen, um eine Liste der mehreren Empfangsstationen zu erstellen, die in Abhängigkeit von einem Funkempfangsqualitätsanzeiger (CQI) jeder Empfangsstation eingestuft sind,
- Einrichtungen, um die Liste in P Gruppen von Empfangsstationen aufzuteilen,
- Einrichtungen, um für jedes elementare Zeitfenster des Mehrfachzugriffsmechanismus eine Zielempfangsstation in jeder der Gruppen auszuwählen.

9. Vorrichtung nach Anspruch 8, **dadurch gekennzeichnet, dass** die Einrichtungen zur Auswahl einer Zielempfangsstation in jeder der Gruppen einen opportunistischen Ablaufsteuerungsalgorithmus enthalten.

10. Vorrichtung nach Anspruch 9, **dadurch gekennzeichnet, dass** die Einrichtungen zur Auswahl einer Zielempfangsstation die Empfangsstationen auswählen können, die in ihrer Gruppe den höchsten augenblicklichen Empfangsqualitätsanzeiger haben.

11. Vorrichtung nach Anspruch 9, **dadurch gekennzeichnet, dass** die Einrichtungen zur Auswahl einer Zielempfangsstation die Empfangsstationen auswählen können, die in ihrer Gruppe das höchste Verhältnis zwischen dem augenblicklichen Empfangsqualitätsanzeiger und dem mittleren Empfangsqualitätsanzeiger haben.

12. Vorrichtung nach Anspruch 9, **dadurch gekennzeichnet, dass** die Einrichtungen zur Auswahl einer Zielempfangsstation die Empfangsstationen auswählen können, die das höchste Verhältnis zwischen dem augenblicklichen Empfangsqualitätsanzeiger und einem für die in einem Zeitfenster empfangene mittlere Datenübertragungsrate repräsentativen Wert haben.

13. Sendestation (10), die Daten mittels eines Zeitmultiplex-Mehrfachzugriffsmechanismus mit gemeinsamer Codierung an mehrere Zielempfangsstationen in einem Datenfunkübertragungssystem übertragen kann, **dadurch gekennzeichnet, dass** sie eine Vorrichtung zur Auswahl von Zielempfangsstationen nach einem der Ansprüche 8 bis 12 enthält.
